(19) Europäisches Patentamt
European Patent Office
Office européen des brevets

(11) Veröffentlichungsnummer : **0 114 055**
**B1**

(12) # EUROPÄISCHE PATENTSCHRIFT

(45) Veröffentlichungstag der Patentschrift : **12.11.86**

(21) Anmeldenummer : **84100168.8**

(22) Anmeldetag : **10.01.84**

(51) Int. Cl.⁴ : **C 07 F 9/165**, C 07 F 9/40, C 07 F 9/24, A 01 N 57/16, A 01 N 57/24, A 01 N 57/32

(54) **Thiophosphorsäureester.**

(30) Priorität : **18.01.83 DE 3301347**

(43) Veröffentlichungstag der Anmeldung : **25.07.84 Patentblatt 84/30**

(45) Bekanntmachung des Hinweises auf die Patenterteilung : **12.11.86 Patentblatt 86/46**

(84) Benannte Vertragsstaaten : **AT BE CH DE FR GB IT LI NL**

(56) Entgegenhaltungen :
**US-A- 3 205 238**
**US-A- 3 234 237**
**CHEMICAL ABSTRACTS, Vol. 73, 1970, page 346, ref. no. 14632b**
**CHEMICAL ABSTRACTS, Vol. 85, 1976, page 629, ref. no. 942293c**
**L. Bretherick, Handbook of Reactive Chemical Hazards, pages 79, 524**
**Die Akte enthält technische Angaben, die nach dem Eingang der Anmeldung eingereicht wurden und die nicht in dieser Patentschrift enthalten sind.**

(73) Patentinhaber : **BASF Aktiengesellschaft**
**Carl-Bosch-Strasse 38**
**D-6700 Ludwigshafen (DE)**

(72) Erfinder : **Seppelt, Wolfgang, Dr.**
**Lucas-Cranach-Strasse 8**
**D-6712 Bobenheim-Roxheim (DE)**
Erfinder : **Seufert, Walter, Dr.**
**Laerchenweg 19**
**D-6720 Speyer (DE)**
Erfinder : **Kiehs, Karl, Dr.**
**Sudetenstrasse 22**
**D-6840 Lampertheim 1 (DE)**
Erfinder : **Adolphi, Heinrich, Dr.**
**Kalmitweg 11**
**D-6703 Limburgerhof (DE)**

EP 0 114 055 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft neue Thiophosphorsäureester, Verfahren zu ihrer Herstellung und Pflanzenschutzmittel, die diese Verbindungen als Wirkstoff enthalten.

Es ist bereits bekannt, daß O,O-Dialkyl-S-[2-tetrahydrothiopyranyl]-dithiophosphorsäureester (Probl. S.-SK. Nauki Mosk. Univ. *1975*, 260 = CA *85*, 94293, ferner Z. Org. Chim. 6, 877 (1970) = CA *73*, 14632b) oder O,O-Dialkyl-S-[3-tetrahydrothiophenyl]-dithiophosphorsäureester (US 3 234 337) bzw. im Ring substituierte Vertreter (US 3 234 238) insektizide und akarizide Wirkung besitzen. Die bekannten, hydrierte, Schwefel enthaltende Heterocyclen enthaltenden Wirkstoffe sind schwer herstellbar und/oder weisen keine ausreichende Wirkung auf.

Es wurden nun neue Thiophosphorverbindungen der allgemeinen Formel (I)

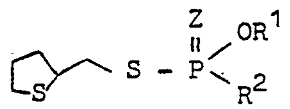

(I)

gefunden, wobei

$R^1$ einen Alkylrest mit bis zu 3 Kohlenstoffatomen,

$R^2$ einen gegebenenfalls substituierten Alkyl-, Alkoxy-, Alkylthio-, Alkylamino- oder Dialkylaminorest mit bis zu 5 Kohlenstoffatomen,

Z Sauerstoff oder Schwefel bedeuten.

Diese neuen Verbindungen sind bekannten, dem Stand der Technik entsprechenden Verbindungen an biologischer Wirkung deutlich überlegen. Die erfindungsgemäßen Produkte stellen somit eine Bereicherung der Technik dar, zumal sie auch in solchen Fällen wirken, in denen gut eingeführte Mittel des Standes der Technik infolge Gewöhnung der Schädlinge versagen.

Man kann die erfindungsgemäßen Verbindungen (I) erhalten, indem man ein entsprechendes Phosphorsäurederivat der allgemeinen Formel (II)

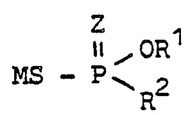

(II)

entweder mit einer Halogenverbindung der Formel (III)

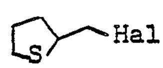

(III)

oder einer entsprechenden Halogenverbindung der Formel (IIIa)

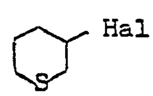

(IIIa)

in welcher Hal für ein Halogenatom steht, umsetzt.

Verwendet man beispielsweise das Dimethylammoniumsalz der O-Ethyl-S-n-propyl-dithiophosphorsäuren und 3-Brom-tetrahydrothiopyran als Ausgangsstoffe, so kann der Reaktionsverlauf durch das folgende Formelschema wiedergegeben werden :

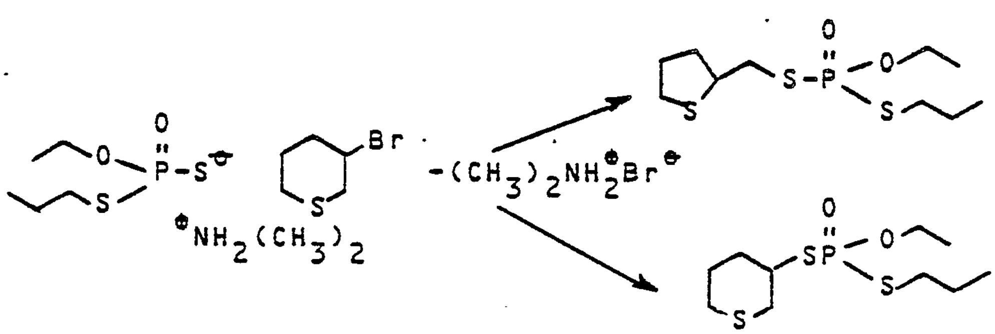

In untergeordnetem Maß kann dabei auch die Sechsringverbindung als Nebenprodukt entstehen.

Hierzu ist folgendes zu bemerken :

Aus Bull. Soc. Chim. France *1974*, 590 ; Heterocycles *4*, 1839 (1976) bzw. *5*, 29 (1976) und Tetrahedron Lett. *1975*, 3923 ist bekannt, daß bestimmte Tetrahydrothiopyran- und -thiophenverbindungen miteinander im Gleichgewicht stehen. Insbesondere trifft dies für die Halogenide zu.

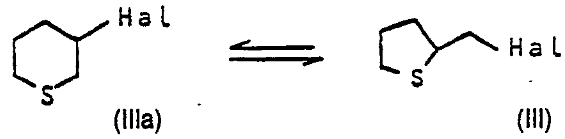

(IIIa) (III)

Das Gleichgewicht liegt zwar auf der Seite der Sechsringverbindung (IIIa), jedoch tritt bei einer Umsetzung, wie sie vorstehend beschrieben wird, offenbar die Fünfringverbindung (III) bevorzugt in Reaktion, so daß nach und nach in der Hauptsache die den Fünfring enthaltende Phosphorverbindung gebildet wird. Die Sechsringverbindung entsteht in untergeordneter Menge.

Beide Verbindungen, sowohl die Fünf- wie die Sechsringverbindung, sind biologisch aktiv, jedoch wird erfindungsgemäß die Fünfringverbindung bevorzugt. Die Sechsringverbindungen lassen sich i. a. durch chromatographische Methoden von der Hauptkomponente abtrennen oder beide lassen sich durch chemische Umwandlung in Derivate überführen, die eine Trennung und Zuordnung erlauben.

Die zu verwendenden Ausgangsstoffe sind durch die Formeln II, III und IIIa eindeutig allgemein definiert. Vorzugsweise steht $R^1$ jedoch für geradkettige Alkylreste mit 1 bis 3 Kohlenstoffatomen wie Methyl, Ethyl oder n-Propyl ; $R^2$ steht vorzugsweise für Alkoxy-, Alkylthio-, Alkylamino- oder Alkylaminoreste, wobei die Alkylreste 2 bis 4 Kohlenstoffatome haben, wie Ethyl, n- oder iso-Propyl, sec.- oder iso-Butyl.

Als Beispiele für verwendbare Ausgangsprodukte (II) seien im einzelnen genannt die Kalium-, Natrium- oder Ammoniumsalze der O,O-Diethyl-, oder O-Ethyl-S-propyl- oder n- bzw. iso-propyl- oder iso- bzw. sec.-butyl-, oder O-Ethyl-N-iso-propyl-(di)thiophosphorsäure(amide).

Ein Beispiel für die Ausgangsverbindungen (IIIa) bzw. (III) ist 3-Brom-tetrahydrothiopyran bzw. 2-Brommethyltetrahydrothiophen. Sie sind bekannt (s. J. Am. Chem. Soc. *74*, 1569 (1952) ; Bull. Soc. Chim. France *1974*, 590). Gleiches gilt für 3-Chlor-tetrahydrothiopyran bzw. 2-Chlormethyltetrahydrothiophen (s. Tetrahedron Lett. *1975*, 3923).

Die Umsetzungen werden gewöhnlich in einem Lösungs- bzw. Verdünnungsmittel vorgenommen. Es eignen sich praktisch alle technisch üblichen organischen Lösungs- bzw. Verdünnungsmittel, soweit sie chemisch indifferent sind. Hierzu gehören insbesondere aliphatische und aromatische, gegebenenfalls chlorierte Kohlenwasserstoffe wie Benzol, Toluol, Xylol, Benzin, Methylenchlorid, Chloroform, Tetrachlorkohlenstoff, Chlorbenzol, Ether wie Diethyl- und Dibutylether, ferner Ketone, wie Aceton, Methylethyl-, Methylisopropyl- und Methylisobutylketon. Besonders bewährt haben sich Nitrile, wie Keto- und Propionitril.

Die Reaktionstemperatur kann in einem größeren Bereich variiert werden. Im allgemeinen verlaufen die Umsetzungen unterhalb von 100 °C, vorzugsweise bei bis zu 70 °C mit ausreichender Geschwindigkeit und es genügt i. a., bei atmosphärischem Druck zu arbeiten.

Bei der Durchführung der Verfahren werden die Verbindungen der Konstitution (II) und (III) bzw. (IIIa) meist in stöchiometrischem Verhältnis eingesetzt. Ein Überschuß der einen oder anderen Reaktionskomponente hat i. a. keine besonderen Vorteile.

Die erfindungsgemäßen Stoffe fallen meist in Form farbloser bis schwach gelb gefärbter, viskoser, wasserunlöslicher Öle an, die durch sogenanntes « Andestillieren », d. h. längeres Erhitzen unter vermindertem Druck auf mäßig erhöhte Temperaturen von den letzten flüchtigen Anteilen befreit und auf diese Weise gereinigt werden können.

Die Gewinnung der erfindungsgemäßen Stoffe kann mit folgenden Herstellungsvorschriften verdeutlicht werden, die unter entsprechender Abwandlung auch zur Gewinnung der weiter unten tabellarisch aufgeführten Stoffe verwendet worden sind.

## Herstellungsbeispiele

### Beispiel 1

O,O-Diethyl-S-(tetrahydrothiophenyl-2-methyl)-thiophosphorsäureester bzw. O,O-Diethyl-S-[tetrahydrothiopyran-3-yl]-thiophosphorsäureester (Nr. 1, 1a).

Zu 18,1 g (0,1 Mol) 3-Brom-tetrahydrothiopyran in 150 ml Acetonitril gibt man bei Raumtemperatur 18,7 g (0,1 Mol) Ammonium-O,O-diethyl-thiophosphat. Nach 6 Stunden bei 45 °C engt man im Vakuum ein, nimmt den Rückstand in 300 ml Toluol auf und wäscht dreimal mit je 50 ml Wasser. Die Toluolphase

wird über $Na_2SO_4$ getrocknet. Nach dem Abdestillieren des Lösungsmittels unter vermindertem Druck trocknet man den öligen Ester an der Ölpumpe bei 50 °C. Ausbeute 19,7 g (0,073 Mol) = 73 % ; $N_D^{20}$ = 1.517 0.

Analyse (Mg 270) : $C_9H_{19}O_3PS_3$
Ber. : C 40,0 H 7,1 S 23,7 P 11,4
Gef. : C 40,3 H 7,1 S 23,0 P 10,9

Nach der Auswertung des $^{13}C$-NMR-Spektrums handelt es sich um ein Gemisch von (1) und (1a), wobei der Anteil an (1a) um 5 % beträgt. (1) (1a) lassen sich chromatographisch nur schlecht trennen, sie werden deshalb in trennbare Derivate überführt :

Durch Oxidation mittels 3-Chlorperbenzoesäure werden (1) und (1a) in die Sulfone (1′) und (1a′) umgewandelt

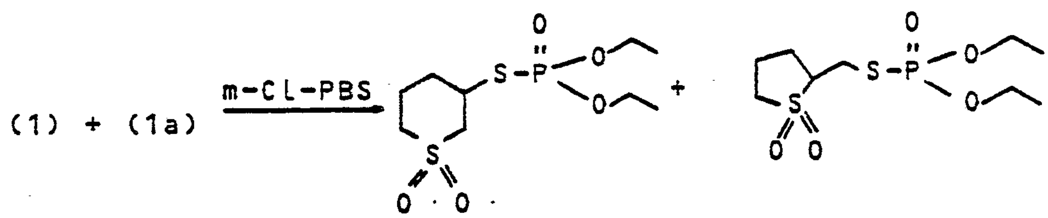


(1a) (1)

die ihrerseits chromatographisch trennbar und spektroskopisch zuordenbar sind. Ihr Mengenverhältnis entspricht dem von (1) und (1a).

(1a′) : Öl ; Massenspektrum m/e = 302 ; $^1H$-NMR ($CDCl_3$) : 4.2 (4H, m), 3.7 (1H, m), 35 (1H, m), 3.3 (1H, dd), 3.1 (1H, m), 2.9 (1H, m), 2.1 (3H, m), 1.8 (1H, m) und 1.4 (6H, t) ppm.

(1′) : Öl ; Massenspektrum m/e = 302 ; $^1H$-NMR ($CDCl_3$) : 4.2 (4H, m), 3.4 (1H, m), 3.2 (2H, m), 3.0 (2H, m), 2.5 (1H, m), 2.2 (1H, m), 2.1 (1H, m), 1.9 (1H, m) und 1.4 (6H, t) ppm.

(1) : Öl ; $^1H$-NMR ($CDCl_3$) : 4.2 (4H, m), 3.6 (1H, m), 3.0 (2H, dd), 2.9 (2H, m), 2.1 (3H, m), 1.8 (1H, m) und 1.4 (6H, t).

## Beispiel 2

O-Ethyl-S-sec.-butyl-S-(tetrahydrothiophenyl-2-methyl)-dithiophosphorsäureester bzw. O-Ethyl-S-sec.-butyl-S-[tetrahydrothiopyran-3-yl]-dithiophosphorsäureester (Nr. 2, 2a).

Zu 13,0 g (0,05 Mol) Dimethylammonium-O-Ethyl-S-sec.-butyl-dithiophosphat in 100 ml Acetonitril tropft man 8,1 g (0,045 Mol) 3-Brom-tetrahydrothiopyran. Nach 14 Stunden bei Raumtemperatur engt man im Vakuum ein, nimmt den Rückstand in 300 ml Toluol auf, wäscht dreimal mit je 100 ml $H_2O$ und trocknet die Toluolphase über $Na_2SO_4$. Nach dem Abdestillieren des Lösungsmittels unter vermindertem Druck trocknet man an der Ölpumpe bei 45 °C. Ausbeute 11,8 g eines öligen Produkts (0,038 Mol = 83 %) ; $N_D^{22}$ = 1.548 0.

Analyse (Mg 314) : $C_{11}H_{23}O_2PS_3$
Ber. : C 42,0 H 7,4 P 9,8 S 30,6
Gef. : C 41,7 H 7,3 P 9,5 S 30,5

Die folgenden Verbindungen der Formel (I) wurden nach den vorstehenden Vorschriften erhalten :

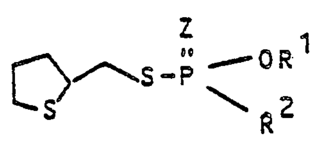

(Siehe Tabelle I Seite 5 f.)

Tabelle I

| Nr. | Z | $R^1$ | $R^2$ | °C | $n_D$ |
|---|---|---|---|---|---|
| 3 | S | $CH_3$ | $OCH_3$ | 20 | 1,5722 |
| 4 | S | $C_2H_5$ | $OC_2H_5$ | 20 | 1,5540 |
| 5 | O | $C_2H_5$ | $S-n-C_3H_7$ | 20 | 1,5543 |
| 6 | O | $C_2H_5$ | $S-i-C_4H_9$ | 23 | 1,5469 |
| 7 | O | $C_2H_5$ | $NH-i-C_3H_7$ | 22 | 1,5288 |
| 8 | O | $C_2H_5$ | $S(CH_2)_2SC_2H_5$ | 22 | 1,5702 |
| 9 | O | $C_2H_5$ | $N(CH_3)_2$ | 22 | 1,5302 |

Die in der nachstehenden Tabelle II angeführten Stoffe können nach den gleichen Methoden wie die in Tabelle I vorstehend beschriebenen erhalten werden ; aufgrund ihrer strukturellen Ähnlichkeit kann erwartet werden, daß sie eine vergleichbare Wirksamkeit besitzen. Die Bedeutung der Substituenten bzw. Molekülteile entspricht der in Tabelle I angegebenen.

Tabelle II

| Nr. | Z | $R^1$ | $R^2$ |
|---|---|---|---|
| 10 | S | $C_2H_5$ | $SC_2H_5$ |
| 11 | O | $C_2H_5$ | $SC_2H_5$ |
| 12 | O | $C_2H_5$ | $CH_3$ |
| 13 | S | $C_2H_5$ | $CH_3$ |
| 14 | O | $CH_3$ | $OCH_3$ |
| 15 | O | $n-C_3H_7$ | $S-n-C_3H_7$ |
| 16 | S | $n-C_3H_7$ | $O-n-C_3H_7$ |
| 17 | O | $C_2H_5$ | $NHC_2H_5$ |
| 18 | O | $C_2H_5$ | $N(C_2H_5)_2$ |
| 19 | O | $C_2H_5$ | $NH-nC_3H_7$ |
| 20 | O | $C_2H_5$ | $SCH_3$ |

Zur Prüfung der biologischen Wirkung wurden die nachstehendenden Tests verwendet. Als Vergleichsmittel wurden die bekannten Verbindungen A und B gewählt :

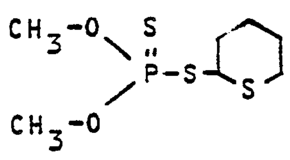

(A)

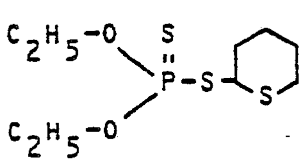

(B)

1. Kontaktwirkung auf Schaben (Blatta orientalis)

Der Boden eines 1 1-Weckglases wird mit der acetonischen Lösung des Wirkstoffes behandelt.
Nach Verdunsten des Lösungsmittels setzt man je Glas 5 adulte Schaben.
Die Mortalitätsrate wird nach 48 Stunden bestimmt.
In diesem Test erzielten die Proben der Beispiele Nr. 2, 5 und 6 bei Anwendungsmengen von 0,1 bis

0,25 mg 80 bis 100 %ige Mortalität, während die Vergleichsmittel A und B bei jeweils 1 mg angewandter Menge weniger als 40 % Mortalität erzielten.

2. Kontaktwirkung auf Stubenfliegen (Musca domestica) Applikationstest

4 Tage alte Imagines erhalten in leichter $CO_2$-Narkose 1 µl der acetonischen Wikstofflösung auf das ventrale Abdomen appliziert. Hierzu wird eine Mikrometerspritze verwendet.

Je 20 Versuchstiere mit gleicher Behandlung bringt man in einem Cellophanbeutel (ca. 500 ml).

Nach 4 Stunden zählt man die Tiere in Rückenlage aus und ermittelt graphisch die LD 50. Sie betrug bei den Proben 2, 5 und 6 zwischen etwa 0,01 und 0,1 µg je Fliege.

3. Zuchtversuch mit Stubenfliegen-Larven (Musca domestica)

Je 4,5 ml Magermilch füllt man in 50 ml Pennicillingläser und versetzt sie darauf mit 0,5 ml der wäßrigen Wirkstoffaufbereitung. Nach kurzem Mischen fügt man ein Wattebällchen (Firma Hartmann, Maintal) dazu und belegt dieses mit ca. 50 Ei-Larven der Stubenfliege. Die Gläser lagert man abgedeckt bei Raumtemperatur und beurteilt die Entwicklung nach 7 Tagen.

Proben der Verbindungen Nr. 5 und 6 erwiesen sich bei Konzentrationen von 1 bis 5 ppm als voll wirksam, während die Vergleichsmittel noch bei 50 ppm unwirksam waren.

4. Kontaktwirkung auf Baumwollwanzen (Dysdercus intermedius)

Petrischalen von 10 cm Durchmesser werden mit 1 ml der acetonischen Wirkstofflösung ausgekleidet.

Nach Verdunsten des Lösungsmittels besetzt man die Schalen mit je 20 Larven des vorletzten Stadiums und registriert die Wirkung nach 24 Stunden.

In diesem Test erwiesen sich die Verbindungen Nr. 1, 2, 3, 4, 5, 6 und 7 als bis zu 10-fach wirksamer als Vergleichsmittel A.

5. Kontaktwirkung auf Blattläuse (Aphis fabae) Spritzversuch

Getopfte Buschbohnen (Vicia faba) mit starken Blattlauskolonien werden in der Spritzkammer mit den wäßrigen Wirkstoffaufbereitungen tropfnaß gespritzt.

Die Auswertung erfolgt nach 24 Stunden.

In diesem Test erwiesen sich die Verbindungen Nr. 1, 3, 4, 5, 6 und 7 als 10 bis 1 000 mal stärker wirksam als die Vergleichsmittel A oder B.

6. Wirkung auf Spinnmilben (Tetranychus telarius) (Test A)

Getopfte Buschbohnen, die das erste Folgeblattpaar entwickelt haben und einen starken Besatz aller Stadien der Spinnmilbe Tetranychus telarius tragen, werden in der Spritzkabine mit der wäßrigen Wirkstoffaufbereitung tropfnaß gespritzt. Die Pflanzen kommen dazu auf einen Drehteller und werden von allen Seiten mit 50 ml Spritzbrühe besprüht. Der Sprühvorgang dauert ca. 22 Sekunden.

Nach 8 Tagen werden die Pflanzen auf lebende Spinnmilben untersucht.

In diesem Versuch erwiesen sich die Verbindungen Nr. 5, 6 und 7 als wenigstens 5-fach wirksamer als die Vergleichsmittel A und B.

7. Kontaktwirkung auf Zecken (Ornithodorus moubata)

Die Prüfung erfolgt an jungen Zecken, die erst einmal Blut aufgenommen haben. Je 5 Tiere werden in einem TEEFIX-Beutel 5 Sekunden in die wäßrige Wirkstoffaufbereitung getaucht. Der Beutel wird frei aufgehängt. Nach 48 Stunden ermittelt man die Mortalitätsrate. Die Versuchstemperatur beträgt 25 bis 26 °C.

In diesem Versuch erzielte wenigstens eine der Verbindungen Nr. 1, 2, 3, 4, 6 und 7 eine 50-fach bessere Aktivität als Vergleichsmittel B und die am wenigsten wirksame Verbindung erwies sich als noch 4-mal wirksamer als das Vergleichsmittel.

8. Wirkung auf Wurzelgallennematoden (Meloidogyne incognita)

Je 300 g Komposterde werden mit 30 ml der wäßrigen Wirkstoffaufbereitung innig vermischt und in Plastiktöpfe gefüllt. Darauf bepflanzt man die Töpfe mit Tomatensetzlingen und hält diese unter Gewächshausbedingungen bei 22 bis 24 °C.

Nach 6 bis 8 Wochen untersucht man die Wurzeln auf Gallenbildung.

Bei diesem Versuch erzielten die Verbindungen Nr. 2, 3, 5, 6 und 7 bei 0,01 bis 0,1 % vollständige Wirkung, während trotz einer Konzentration der Vergleichsmittel von 0,1 % starke Gallenbildung auftrat.

**Patentansprüche**

1. Thiophosphorsäureverbindungen der allgemeinen Formel (I)

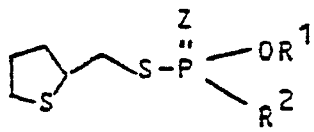

(I)

in der

$R^1$ einen Alkylrest mit bis zu 3 Kohlenstoffatomen,

$R^2$ einen gegebenenfalls substituierten Alkyl-, Alkoxy-, Alkylthio-, Alkylamino- oder Dialkylaminorest mit bis zu 5 Kohlenstoffatomen,

Z Sauerstoff oder Schwefel bedeuten.

2. Verfahren zur Herstellung von Thiophosphorsäureverbindungen der allgemeinen Formel (I) gemäß Anspruch 1, dadurch gekennzeichnet, daß man eine Phosphorsäureverbindung der allgemeinen Formel (II),

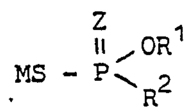

(II)

in welcher Z, $R^1$ und $R^2$ die in Anspruch 1 angegebene Bedeutung haben, und M für ein Alkali-, Erdalkali- oder gegebenenfalls alkylsubstituiertes Ammoniumäquivalent steht, mit einer Halogenverbindung der Formel (III) oder (IIIa)

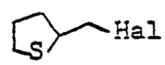

(III)

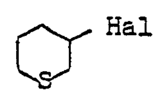

(IIIa)

in welcher Hal für ein Halogenatom steht, umsetzt.

3. Pflanzenschutzmittel, enthaltend eine Verbindung gemäß Anspruch 1 in wirksamer Menge.

4. Pflanzenschutzmittel welches die Verbindungen, erhältlich nach dem Verfahren des Anspruches 2, enthält.

5. Verwendung einer Thiophosphorsäureverbindung der Formel I gemäß Anspruch 1 zur Bekämpfung von Insekten und anderen Gliedertieren.

**Claims**

1. A thiophosphoric acid compound of the general formula (I)

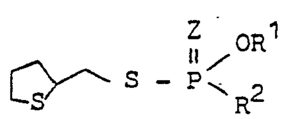

(I)

where

$R^1$ is alkyl of up to 3 carbon atoms,

$R^2$ is an unsubstituted or substituted alkyl, alkoxy, alkylthio, alkylamino or dialkylamino radical of up to 5 carbon atoms, and

Z is oxygen or sulfur.

2. A process for the preparation of a thiophosphoric acid compound of the general formula (I) as claimed in claim 1, wherein a phosphoric acid compound of the general formula (II)

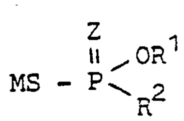

(II)

where Z, $R^1$ and $R^2$ have the meanings given in claim 1 and M is one equivalent of an alkali metal, of an alkaline earth metal or of an unsubstituted or alkylsubstituted ammonium ion, is reacted with a halogen compound of the formula (III) or (IIIa)

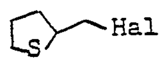

(III)

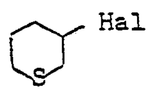

(IIIa)

where Hal is halogen.

3. A crop protection agent containing an effective amount of a compound as claimed in claim 1.

4. A crop protection agent which contains a compound obtainable by the process as claimed in claim 2.

5. The use of a thiophosphoric acid compound of the formula I as claimed in claim 1 for combatting insects and other Articulata.

**Revendications**

1. Dérivés de l'acide thiophosphorique de la formule générale (I)

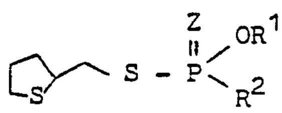

(I)

dans laquelle

$R^1$ désigne un radical alkyle comportant jusqu'à trois atomes de carbone,

$R^2$ désigne un groupe alkyle, alcoxy, alkylthio, alkylamino ou dialkyl-amino éventuellement substitué, comportant jusqu'à cinq atomes de carbone et

Z représente un atome d'oxygène ou de soufre.

2. Procédé de préparation de dérivés de l'acide thiophosphorique de la formule générale (I) selon la revendication 1, caractérisé en ce que l'on fait réagir un dérivé d'acide phosphorique de la formule générale (II)

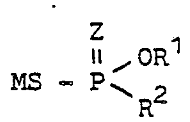

(II)

dans laquelle $R^1$, $R^2$ et Z possèdent les significations définies dans la revendication 1 et M désigne un équivalent de métal alcalin ou de métal alcalino-terreux ou un équivalent ammonium éventuellement substitué, avec un composé halogéné de l'une des formules (III) ou (IIIa)

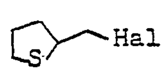

(III)

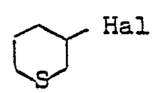

(IIIa)

dans lesquelles Hal désigne un atome d'halogène.

3. Composition phyto-sanitaire, contenant une quantité efficace d'un dérivé selon la revendication 1.

4. Composition phyto-sanitaire, contenant au moins un des composés pouvant être préparés par le procédé selon la revendication 2.

5. Utilisation d'un dérivé de l'acide thiophosphorique de la formule (I) selon la revendication 1 pour la lutte contre des insectes et autres articulés.